**Europäisches Patentamt**

**European Patent Office**

**Office européen des brevets**

(19)

(11) Publication number : **0 270 571 B1**

## (12) EUROPEAN PATENT SPECIFICATION

(45) Date of publication of patent specification :
24.06.92 Bulletin 92/26

(51) Int. Cl.⁵ : **G07F 7/10**

(21) Application number : **87903156.5**

(22) Date of filing : **20.04.87**

(86) International application number :
**PCT/US87/00913**

(87) International publication number :
**WO 87/07063 19.11.87 Gazette 87/25**

(54) **ARRANGEMENT FOR A PORTABLE DATA CARRIER HAVING MULTIPLE APPLICATION FILES.**

(30) Priority : **16.05.86 US 863974**

(43) Date of publication of application :
**15.06.88 Bulletin 88/24**

(45) Publication of the grant of the patent :
**24.06.92 Bulletin 92/26**

(84) Designated Contracting States :
**AT BE CH DE FR GB IT LI NL SE**

(56) References cited :
**EP-A- 0 057 602
EP-A- 0 114 773
EP-A- 0 152 024
EP-A- 0 159 539
EP-A- 0 193 635
WO-A-87/07060**

(73) Proprietor : **AMERICAN TELEPHONE AND
TELEGRAPH COMPANY
550 Madison Avenue
New York, NY 10022 (US)**

(72) Inventor : **ANDERL, Ewald, Christoph
211 Cherry Tree Lane
Middletown, NJ 07748 (US)**
Inventor : **FRANKEL, Oren
52A Raleigh Court, East
Ocean Township, NJ 07712 (US)**
Inventor : **ZAHIVI, Avi
120 Donaldson Street
Highland Park, NJ 08904 (US)**

(74) Representative : **Watts, Christopher Malcolm
Kelway, Dr.
AT&T (UK) LTD. AT&T Intellectual Property
Division 5 Mornington Road
Woodford Green Essex IG8 OTU (GB)**

Jouve, 18, rue Saint-Denis, 75001 PARIS

EP 0 270 571 B1

## Description

### Background of the Invention

#### 1. Technical Field

This invention relates to portable data carriers such as smart cards having electrical memories for storing data, and more particular to an arrangement for storing the data contained in such portable data carriers for multiple applications.

#### 2. Description of the Prior Art

The use of credit cards for purchases and for banking and other transactions has become so popular that most travelers today do so with very little cash. The card, typically made of plastic embossed with an account number and the name of the account owner, serves solely to identify an authorized account at a bank or credit house to be charged for a transaction. A magnetic stripe on the back of some cards contains the same information, but is machine-readable to speed the transaction. All accounting information is stored at the bank or credit house and a separate card is needed for each account.

Many consumers carry around several credit cards for the convenience of transacting his or her daily business at the merchant of his or her choice. A single credit card is light, compact and convenient. Five, six,seven or more, however, are bulky, clumsy and inconvenient for storage in a pocket, wallet or purse. In order to allow the consumer to carry only one card, various multiple company credit card systems have been proposed and used heretofore. In one such arrangement, a primary plate of a size suitable for wallet storage is issued to each credit card user. The plate includes a display or other means of identifying the authorized user and also a display means or microcircuitry for determining which companies have extended the user credit.

While such an arrangement is satisfactory where the potential credit authorizers are few in number and sufficient space is therefore available on the primary plate, it is, nevertheless, unsatisfactory in those applications requiring a large number of credit authorizers or accounting data to be maintained and updated on the multiple company credit card. Once the potential for combining all of his or her credit authorizations on a single card becomes common knowledge to the average user, it is conceivable that the user will want to have available the balances of all of the accounts, the credit limits of all of the accounts, and other such personal data as, for example, the sizes of family members for clothing purchases, personal telephone directories, etc. The need to have specific identifying indicia on the card for each account or special circuitry or custom software for each account severely limited the number of accounts that may be included on a card of this type.

WO-A-8707060, which forms part of the state of the art by virtue of Article 54(3) EPC, discloses an IC card system that includes a programmed microprocessor and a nonvolatile read/wirite memory (EPROM) embedded in an information card which is employed in the system. The data storage portion of the memory in the card is segmentable into one or more data zones, each requiring either no access code or one or more access codes to be entered in the card in order to access (read and/or write) that zone. Segmentation of the card memory and the assignment of required access codes is achieved by writing a zone definition table and one or more access codes into the card memory using a special access code that is fixed in the microprocessor program. The access codes for the data zones are thus stored on the information card and the programmed microprocessor in the card compares incoming codes to the stored codes to determine whether access to a particular data zone is permissible. The access codes for the data zones of the card memory are stored in a second card designated as a control card. This control card and the information card are interfaced in a two card reader/writer. In this manner, the required access codes are transferred from the control card to the information card when access of a data zone therein is required, and the access codes stored in the control card need not become known to any individual.

### Summary of the Invention

According to the invention there is provided a data carrier as set out in claim 1.

Such a portable data carrier or smart card is typically the size of a standard plastic credit card and may be used in a variety of applications, from custom repertory dialing to storage of individual medical and/or banking records. Although the card looks and feels much like an ordinary credit card, it includes a computer, an electrically erasable programmable read-only memory (EEPROM), and also circuitry for receiving a combined power and timing signal from a card reader/writer colocated with an associated station. These card components and circuitry also receive and transmit data signals between the card and, via the reader/writer, the associated station.

A customer's personal information resides in multiple files in the EEPROM on the card. Appropriate application software residing in the station, when accompanied by an appropriate password, enables the retrieval and modification of these files. Security for the card is provided by requiring a separate password for gaining access to each of designated levels of interaction between the card and the associated station. Security is further enhanced since the card requires a user to identify himself by means of an optional password before access to certain designated files is permitted. And only a limited number of incorrect login attempts are permitted before the card is locked preventing any further interaction between the card and the station at the attempted login level.

Since each one of multiple files has its own credentials (file security) on the card, multiple applications or separate accounts may exist in these files without conflict or confusion. A user may easily have 10 or more separate credit or debit accounts, an electronic checkbook, and even a security pass for access to his apartment or home, all on the same card. The maximum number of files permitted on the card is limited only by the memory available on the card.

The card runs an executive operating system that is accessed via a set of operating system primitives. These command primitives manipulate the card file system in accord with rules required by the card security. Use of the executive operating system prevents an intruder from gaining access to the data base in the present card. In addition, encryption of data as it is provided to the card is also available for those particular sensitive applications.

The file system on the card is segmented into two regions, the header which is the administration portion and the data segment that contains the application files.

The high security header contains information such as the card serial number, the passwords for different login levels, a number of unsuccessful consecutive login attempts for each login level, and the size of the memory used for storage in the card. Direct access to the header section is not available to a normal user.

The data segment of the card is divided into fixed records. Each record that contains data is assigned to a particular file. Identification of the appropriate file is through the first byte of each record which is assigned that file identification number.

When a file is scanned by the card operating system, the first record located with a file identification number is the first record in that file, and the last record located with that file identification number is the last record in that file. The card operating system reads the records of a file as each record in the particular file is encountered. A station application software receiving and interpreting the data from a file sees only a contiguous stream of bytes relating to the application being accessed. No information is thus provided to a user of a particular application about other applications in the card or about the card internal file structure.

Brief Description of the Drawings

The invention and its mode of operation will be more clearly understood from the following detailed description when read with the appended drawing in which:

FIG. 1 is a functional block representation of the major functional components of a portable data carrier system and their general interconnection with each other;

FIG. 2 is a table showing six security levels for which access is available to the portable data carrier employed in the system of FIG. 1;

FIG. 3 illustrates the file system for data contained in the portable data carrier which is segmented into two regions, the header and the data segment;

FIG. 4 illustrates the three sections of each file located in the data segment region of a portable data carrier system;

FIG. 5 illustrates the hierarchical structure of the Normal Security Class Levels which employ an optional password per file and an append-only feature;

FIG. 6 is a table showing command primitives used in communicating with the operating system on the portable data carrier;

FIG. 7 depict a flow chart illustrating a login sequence which aids in preventing unauthorized access to the portable data carrier;

FIG. 8 shows the software hierarchy of the portable data carrier system arranged for operation in the protocol employed in the system;

FIG. 9 illustrates a message format suitable for use in communications between the major subsystems of the portable data carrier system;

FIG. 10 depicts a flow chart illustrating the link layer decision making process for operation of the application station in a half-duplex protocol; and

FIG. 11 depicts a flow chart illustrating the link layer decision making process for operation of both the reader/writer and the portable data carrier in a half-duplex protocol.

Throughout the drawings, the same elements when shown in more than one figure are designated by the same reference numerals.

Detailed Description

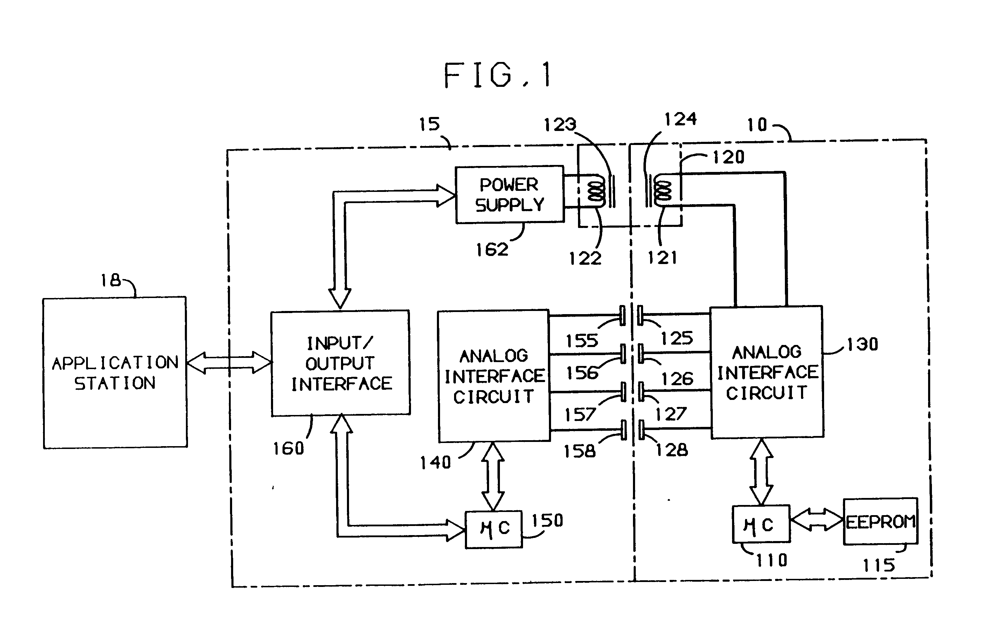

With reference to FIG. 1, there is shown a portable data carrier (PDC) system which for ease of understanding may be divided into three subsystems. The first of these is a portable data carrier or card 10 which contains a memory capable of storing and updating information for a user. The second subsystem is a card reader/writer 15 which links the card with a station 18, the third subsystem. This last subsystem is a suitably configured application station which comprises a computer or dedicated workstation that runs application software necessary for accessing the memory in the card. The application software resides in the station and enables the retrieval and modification of information stored in the memory of the card 10.

The card 10 runs an executive operating system that is accessed via a set of operating system command primitives. These command primitives manipulate a file system on the card in accordance with rules required by card security.

Some of the principle components located in the card 10 are a microcomputer 110, an electrical erasable programmable read-only memory (EEPROM) 115, an analog interface circuit 130, the secondary winding 121 of a transformer 120, and capacitive plates 125 through 128.

The microcomputer 110 includes a central processing unit and memory units in the form of random-access memory and read-only memory. Operating under firmware control provided by its internal read-only memory, the microcomputer 110 formats data that is transferred directly to the EEPROM 115 and via the reader/writer 15 to the station 18. The entire EEPROM or a portion of it may be an integral part of the microcomputer, or it may be a separate element. The microcomputer 110 also interprets the command primitives from the station 18 received through the reader/writer 15.

By employing EEPROM 115 in the card 10, an authorized user has the ability to reprogram certain application files in the memory section of the card while at an authorized associated application station with new and different data as desired. Data may be written to and read or erased from an EEPROM repeatedly while operating power is being applied. When operating power is removed, any changes made to the data in the EEPROM remain and are retrievable whenever the card 10 is again powered.

The analog interface circuit 130 provides a means for interfacing the memory card 10 to the reader/writer 15. This interface performs a multitude of functions including providing operating power from magnetic energy coupled from the reader/writer 15 to the card 10, and also coupling data between the reader/writer 15 and the microcomputer 110 in the card 10. Power for operating the card 10 is provided to the analog interface circuit 130 via an inductive interface provided by the secondary winding 121 of a transformer 120. This transformer is formed when this secondary winding in the card 10 is mated to a primary winding 122 in the reader/writer 15. The station 18 provides the source of power for operation of both the reader/writer 15 and the card 10.

The transformer 120 may advantageously include a ferrite core 123 in the reader/writer for increased coupling between the transformer primary winding 122 and secondary winding 121. A second such core 124 may also be included in the transformer 120 and associated with the secondary winding 121 in the card for a further increase in coupling efficiency. In those arrangements where ample power is available and efficiency is not a consideration, one or both of these cores may be omitted.

Data reception to and transmission from the card 10 are provided by a capacitive interface connected to the analog interface 130. This capacitive interface comprises four capacitors formed when electrodes or plates 125 through 128 on the card 10 are mated with corresponding electrodes or plates 155 through 158 in the reader/writer 15. Two of these capacitors are used to transfer data to the card 10 from the reader/writer 15 and the remaining two are used to transfer data to the reader/writer 15 from the card 10. The combination of the inductive interface and the capacitive interface provides the complete communication interface between the reader/writer 15 and the memory card 10.

The organization of some of the components in the reader/writer 15 functionally mirror those in the card 10. Such components are, for example, an analog interface circuit 140 and a microcomputer 150. In addition, the reader/writer 15 also includes a power supply 162 and an input/output interface 160. The power supply 162 is used to provide power and also to couple a clock signal from the reader/writer 15 to the card 10 through the transformer 120. The input/output interface 160 is principally a universal asynchronous receiver transmitter (UART) and may be advantageously included in the microcomputer 150. This UART communicates with the application station 18, which could be an office editing station, factory editing station, issuer editing station, public telephone station or other suitably configured station.

The security concerns for the PDC system is divided into two broad areas. The first area is directed to aspects of identification and authentication, to insure that the station is both (1) communicating with an authentic card and (2) communicating with an authentic application file on the card. The second area is directed to controlling access to files on the card and limiting the exercise of card commands by an application at the station, an application being an account, or the like, which accesses specific data in a file on the card.

Without a suitable authentication procedure, those with the intent of defrauding the system might be able to simulate the protocol at the station thereby gaining information about the PDC system.

A method of insuring that the station is communicating with an authentic file on an authentic card is achieved by assigning each card a unique serial number and using this number, or subset thereof, along with a concealed application password residing in the station. These numbers are manipulated algorithmically to produce an authentication code which is stored in the application file on the card at the time of creation. During subsequent transactions, this code must be favorably compared to a similar code generated independently by the station.

In order to provide security protection for the card file system and the card commands, and yet allow for flexibility in handling different types of applications, the card employs six different security levels. These security levels enable the card to protect two types of resources: the card file system and the card commands. Access to any of these resources is a function of the authorized login level, the command requested, the file to be accessed, and such additional restrictions as are imposed by the owner of the card.

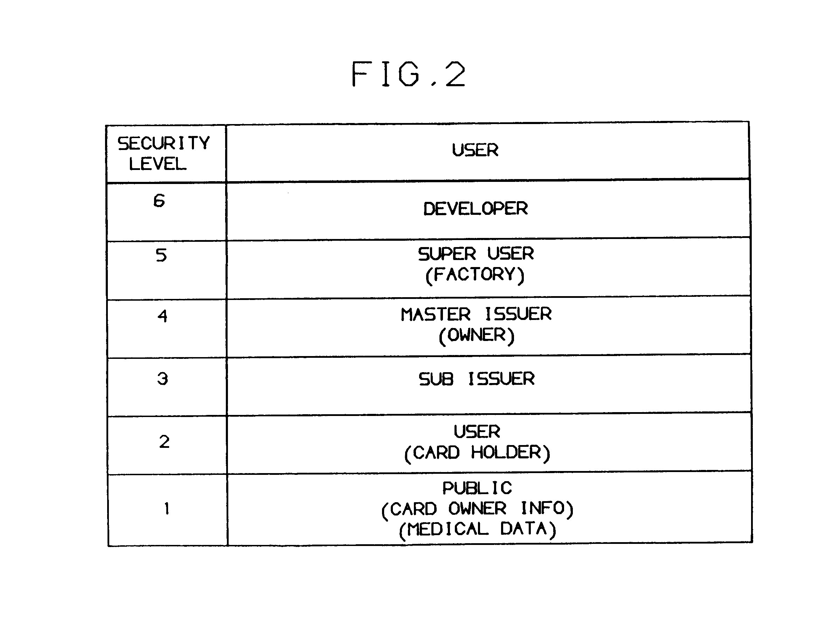

Referring now to FIG 2, there is shown these six login security levels. The first four lower levels are placed in a Normal Security Class category and are available for use in a public environment. The first and lowest level in the hierarchical security level is a PUBLIC login level for general information and does not require a password for access. Medical information and insurance identification numbers or library card information are examples of public data that a person might want to include at this level. When the card is initialized on power-up or reset at a station, it comes up at the PUBLIC login level.

The second level is the USER level and requires a user's password for access. A user may have certain credit and debit accounts at this level. The third level is the SUB ISSUER level which also requires a password for access and is generally the level used in an application licensed by the MASTER ISSUER or the owner of the card.

The fourth level of security is that retained by the MASTER ISSUER. It is at this level that the card is formatted and from which it is issued. An example of how these levels may be utilized is as follows: a bank issues cards containing credit or debit accounts. This bank also licenses the use of its card to retail vendors who establish their own credit or debit accounts on the card. The bank in this example is the MASTER ISSUER and the vendors are SUB ISSUERS. The card holder, of course, is the USER. Each account in this example is handled by a separate file on the card and only persons or programs with the proper credentials for a particular file may access that file at an appropriate application station.

The two top security levels, DEVELOPER and SUPER USER are placed in an Extended Security Class category which permit the use of commands that are not available to the levels in the Normal Security Class category.

The fifth level or SUPER USER level is the factory which is responsible for construction, testing, and initializing blank cards in such a way that security is facilitated and misappropriated blank cards may not be used.

Finally the sixth and highest level is the developer level of the card. Both the SUPER USER and DEVELOPER security levels are capable of accessing the entire contents of the card file system including the card system header, to be discussed in greater detail later herein.

Since multiple files each with their own credentials exist on the card, multiple applications may respectively exist in these separate files without conflict or confusion. It is easy to visualize a person having 10 or more separate credit or debit accounts, an electronic checkbook, and a security pass for access to his apartment, all on the same card. The issuers as well as the user need have little fear of the consequences of misappropriation since the card requires a user to identify himself by means of a password before access to files other than those at the public level is permitted.

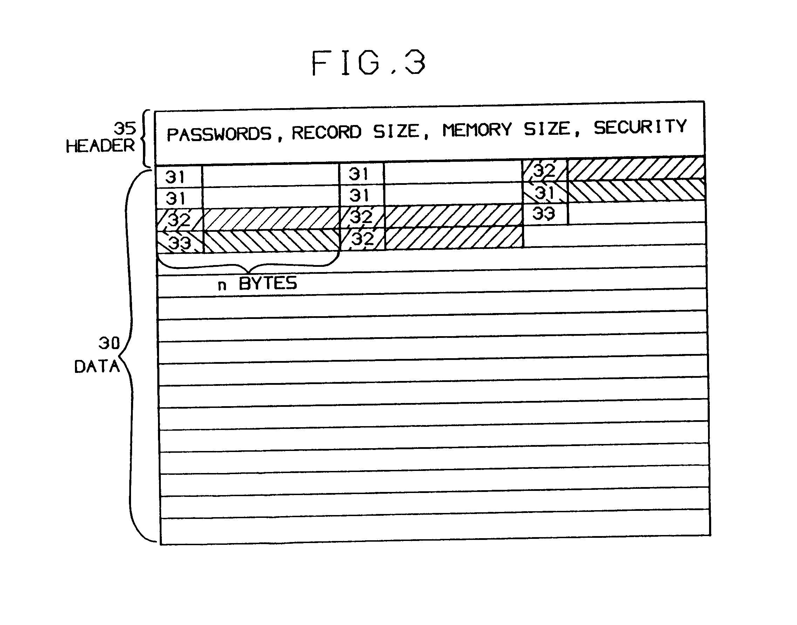

Referring now to FIG. 3, there is shown the card file system which is segmented into two regions, the header which is the administration portion and the data segment that contains the application files.

The high security header 35 contains information such as the card serial number, the passwords for each login level, the number of unsuccessful password attempts for each level, a lock byte for indicating login levels are locked, size of the fixed records in the database and memory size in kilobytes of the EEPROM 115. Direct access to the header section is available only to the two top security levels.

The data segment 30 of the card is divided into fixed records whose lengths of n bytes are set by the MASTER ISSUER. Each utilized record 31, 32, 33 is assigned to a particular file. Identification of the appropriate file is through the first byte of each record which is assigned that file identification number.

The card has no file Directory and there are no pointers between the different records of the same file. File data order is indicated not by contiguous records but by linear order. The operating system of the card scans the address in the EEPROM from the lowest to the highest address. The first record located with a particular file identification number is the first record in that file, and the last record located with that file identification number is the last record in that file. The card operating system reads the records of a file as each record in the particular file is encountered. The maximum size and number of files permitted on the card is limited only by the size of the memory in the EEPROM. Station application software reading a file sees only a contiguous stream of bytes which is independent of the card internal file structure.

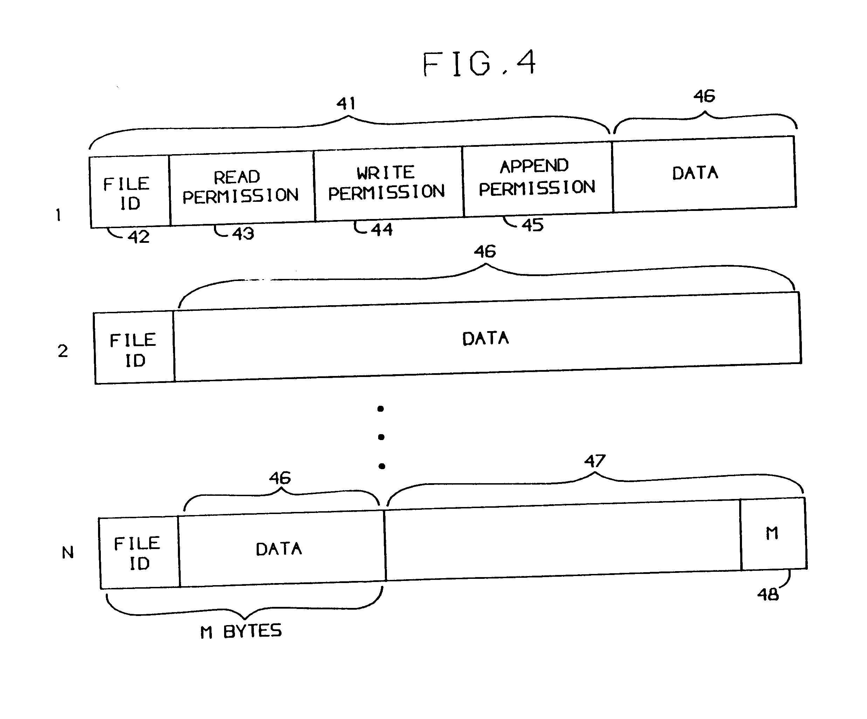

Referring next to FIG. 4, there is shown in greater detail the three sections of each file in the data segment region of a card file system. A prefix section 41 which is located in the first record of each file contains the file identification number 42 and protection bytes 43, 44 and 45. The file identification number is a number between between 1 and hex FE, inclusive. Hex number 00 and hex number FF are reserved for respectively indicating an unused record and the end of available memory in the EEPROM.

The protection bytes 43 through 45 specify the file permissions. The first byte 43 represents read permission designating the minimal level at which the file may be read, and the second byte 44 represents read/write permission designating the minimal level at which the file may be both read and written into.

Thus read permission for a file is separable from read/write permission for a file. Different security levels may also be specified for the read verses the read/write access. For example, the read permission for a file may be at PUBLIC level allowing public access to public information, but the write permission could be specified at USER level which prohibits writing to the file without the user's consent.

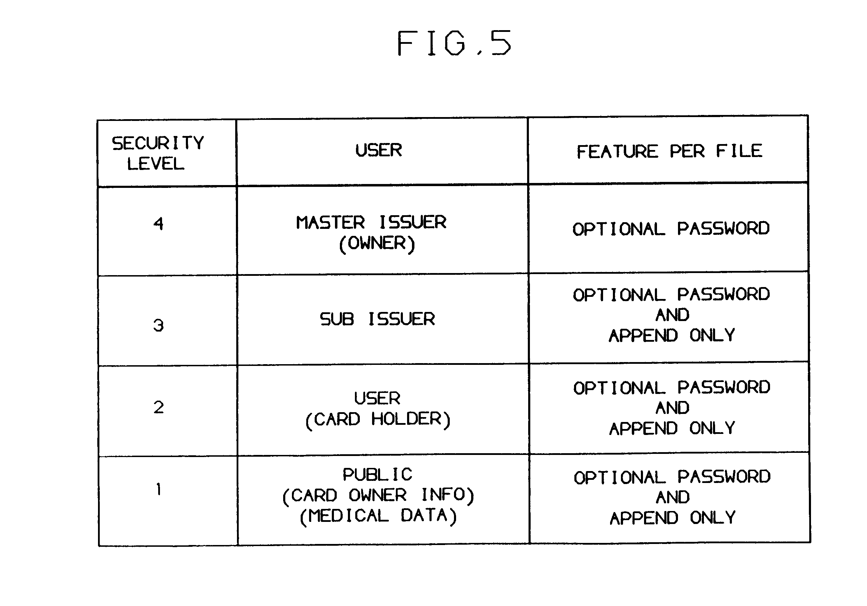

With reference briefly to FIG. 5, there is shown the hierarchical structure of the Normal Security Class levels which may employ optional passwords and an append-only feature. For increased flexibility in the use of the card, each file on the card may include in its protection bytes a requirement that an optional password be provided before allowing access to a particular file. This is in addition to the requirement that a user has to be at the required security level of the card operating system for gaining access to a file protected to that level. Thus, by way of example, a file with read/write permissions for a user which includes an optional write password requires (1) logging into the card at user level and (2) opening the file in order to read it. To write to this file, however, the user must (1) log into the card at user level and (2) open the file for 'write' by providing the optional password. This does not apply to a person logging in at a higher level than the access permissions of a file- require. A person logging in at such a level may gain access to that file even though an optional password is required at the designated security level.

The hierarchical structure of the Normal Security Class levels is such that the MASTER ISSUER is able to read and write to any file at and beneath its level; the SUB ISSUER is able to read and write to any file at and beneath its level. Similarly, the card holder is able to read and write to any file at its level or the public level.

In an application where it is deemed appropriate, the protection byte 45 in FIG. 4 may be set to implement an 'append-only' mode which permits the user to only add data to a file but not overwrite existing data. Records reflecting the appropriate application file are created for accepting this data as it is entered. Thus a file may be designated for read/append permission as well as read/write permission.

An information section 46 of a file contains the actual data located in each record of that file. And a suffix section 47 with a number M in the last byte 48 of the last record N indicates the number of application data bytes in that last record.

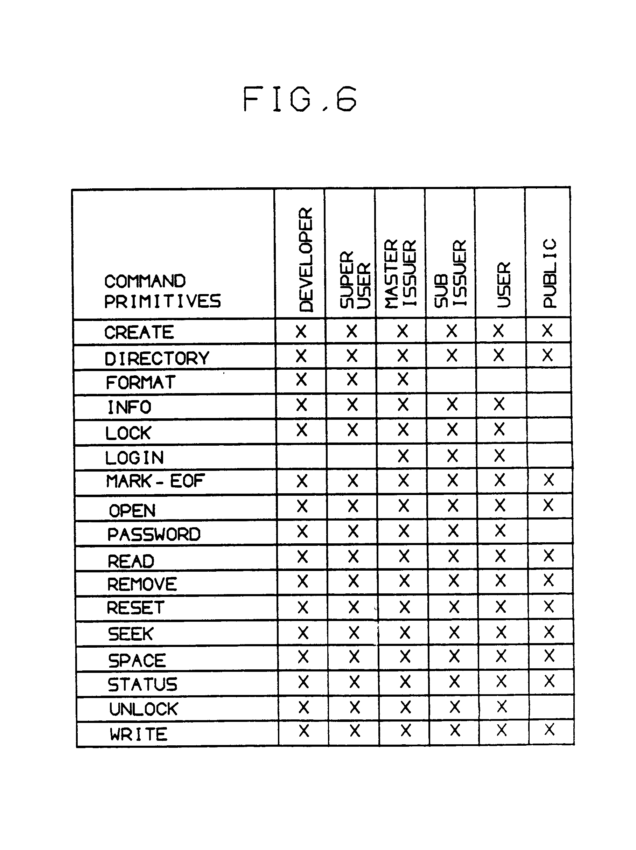

The executive operating system on the card is accessed by the Normal Security Class levels through use of the commonly understood command primitives shown in FIG. 6. These command primitives control the security access for the card, file creation and access and also administrative and testing activities. Additional command primitives are available for the SUPER USER or DEVELOPER login levels.

Operation of these command primitives may be illustrated through a description of the operation of the 'login' command. In order to log into the card, the user is required to specify a login level and a password. This password is checked internally by the card algorithmically against the appropriate password at the same login level in the card header. If a card user is attempting to gain access to a file with a login level lower than that required by the file, permission to open the file either for read or for read/write is denied.

The passwords for each security level are placed in the card header when the card is manufactured. The password command allows the user at a logged on security level to change the password of its level or any level below it. Thus, it a password is lost or forgotten, it can be re-written by logging into the card at a higher security level and using the password command. In this way the lost password need not be recovered.

The number of consecutive unsuccessful 'login' attempts per security level is limited to a specified number. When this number is exceeded the card can be configured either to lock at that security level, or to erase the database of the entire card. If the card is configured to lock, any level above the locked level is able to unlock it. This permits a dispersal of card maintenance to the lowest level possible above the locked level. The number of failures is recorded in the header portion of the EEPROM, in an appropriate "password failure counter".

It is also possible to protect a file which requires an optional password. Files may be individually protected in the same manner as the card by setting a bit for erasing that file in the file protection bytes, if desired. Thus a person attempting to open a file which requires an optional password will only have a certain number of attempts before locking of the card or erasure of the data in that file occurs.

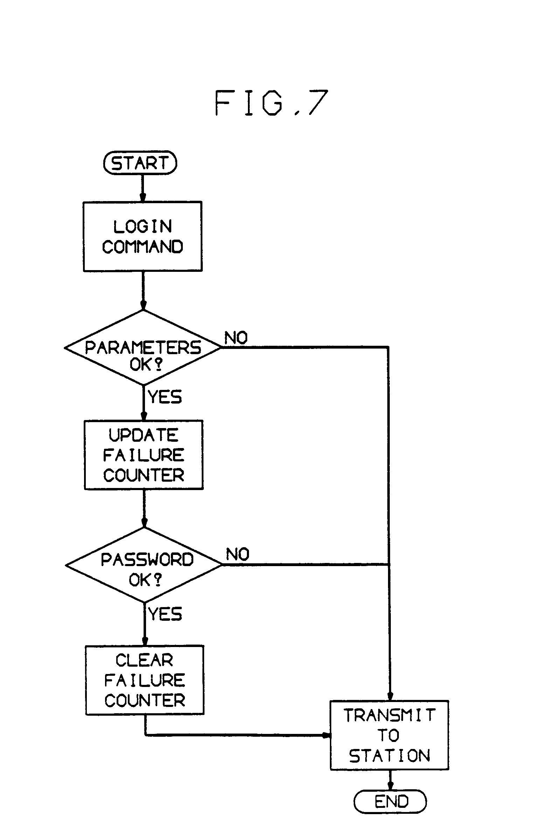

Referring now to FIG. 7, there is shown a flow diagram of that part of the operating system on the card which aids in preventing unauthorized logins into the card. Each time a login command is accessed, the password failure counter is first updated to reflect a password failure. Next, the given password is checked against the password in the card header. If the proper password is given, the password counter is cleared. This feature prevents sophisticated brute force attacks on the password by equipment which could remove power from the card after unsuccessful login attempts but before the failure counter could be updated to reflect the failure.

To aid in the development of application software, a high level software library has been created to support all interactions between the station and the reader/writer and also between the station and the card. As a result, an application programmer does not need to be concerned with the tedious details of the card internals or the communication protocol. His code interfaces directly with the library and the library interfaces with the card.

The library is divided into four sections: a card library section which provides for direct mapping of card commands such as those shown in FIG. 6, a reader/writer library section which provides for direct mapping of reader/writer commands, a compound library section which contains card and/or reader/writer commands, and finally a control section which contains common control functions located on the station. These functions include details of initialization, termination and control of ports and logical devices. This library thus functions as a software interface and provides a way to access devices and files that closely resembles typical computer protocols and eases the burden on the application programmer.

Allocation of records, deallocation of records and garbage collection are provided for in the operating system of the card. When information is deleted from a file, the card returns any released records to the available pool of records and arranges in linear order the utilized records by performing a garbage collection. Through this garbage collection, all unused records on the card are collected at the end of the card memory. Allocation of additional records, as required, is automatically performed when a write goes beyond the last record of a file. By always maintaining the available records at the end of the card, new records for a file are always allocated past the previous end of the file thereby maintaining the linear order of the records of each file.

Information as to the allocation and deallocation of records is not available to the application at the station. Security is enhanced since the application merely sees contiguous data without any implementation details. Nor is direct access to the application files in raw format permitted to users having access to those commands found in the Normal Security Class level. Access to the entire card is permitted only to the users having access to the commands found in the Extended Security Class level to insure tight security during card production and testing.

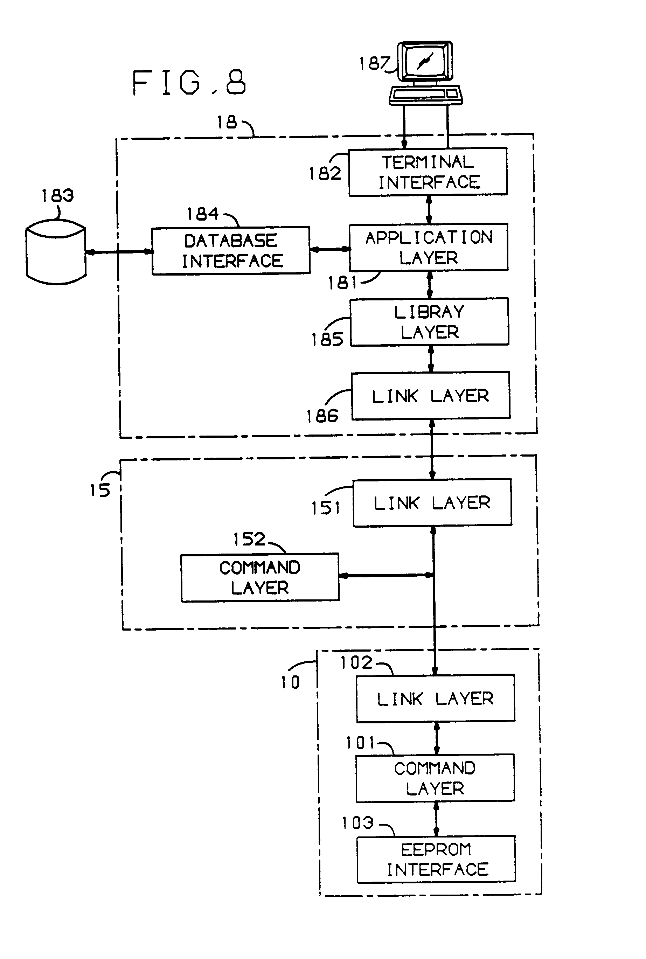

Referring now to FIG. 8, there is shown the software hierarchy arranged for operation in the communications protocol of the PDC system. An application layer 181 within the station 18 interfaces with the card 10 and also with the user at a terminal 187 through a terminal interface 182 or to an optional database through a database interface 184. To simplify access to the card 10, the application layer 180 interfaces with the library layer 185 discussed herein above. This in turn interfaces with the link layer 186 which handles the actual transactions with the reader/writer 15 and the card 10.

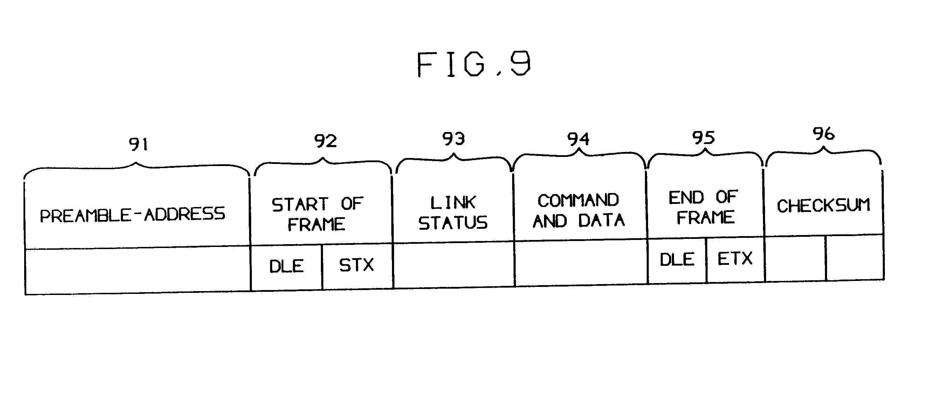

Although the station 18 is connected through a serial port to the reader/writer 15, it communicates directly with the card 10 as well as with the reader/writer 15. Every message which is intended for the card 10 is therefore transparently forwarded through the reader/writer 15 to the card 10. The destination address is found in the preamble section of the message. A message format suitable for use in the present invention is shown in FIG. 9 and described in greater detail later herein.

The reader/writer 15 and the card 10 both implement the same half-duplex communication protocol with the station at the data link layer 186. The card 10 is fully passive and not able to initiate any transaction with the station 18. The reader/writer 15 differs, in one aspect, in that it is able to signal 'attention' to the station via a carrier detect lead in the serial port connecting the two. The station 18 responds to the 'attention' signal after completing any present transaction in which it is then involved. The station next interrogates the reader/writer 15 to determine the reason for the 'attention' signal. An example of when the reader/writer 15 would provide such an attention signal is when the card 10 is inserted in an accommodating slot (not shown) on the reader/writer 15 and in position for communicating with the station 18. A second example would be when the card 10 is removed from slot in the reader/writer 15.

The reader/writer has two layers, a link layer 151 and a command layer 152. The link layer 151 acts as the transparent medium between the station 18 and card 10 passing commands or responses therebetween. The link layer 151 in the reader/writer 15 also provides buffering and baud rate conversion, as necessary. The transmission rate between the card 10 and the reader/writer 15 is maintained at 19200 baud. If the baud rate between the station 18 and the reader/writer 15 is slower than the baud rate between the reader/writer 15 and the card 10, the reader/writer 15 provides the baud rate conversion and buffers the message such that it is sent to the card as a block of contiguous data. The second layer in the reader/writer is the command layer. This layer is in the reader/writer for responding to those commands specifically addressed to the reader/writer from the station 18.

Data in the protocol is sent over the communication link in a serial manner, character by character. A character is framed with one start bit and one stop bit. Messages of contiguous blocks of characters are initiated at any time within the constraints of the half-duplex protocol. The station 18 and the reader/writer 15 or the card 10 exchange information in a predefined message packet. A packet contains control information as to where the data begins and ends in the packet and also contains information for checking the message data integrity.

Referring now to FIG. 9 in greater detail, and in combination with FIG. 8, there is shown a message format suitable for use in the present invention wherein the station 18 addresses the reader/writer 15 or the card 10. The message format consists of a preamble 91 for addressing the reader/writer 15 or card 10 and a start-of-frame control sequence 92 for marking the beginning of the message (DLE STX). Next in the message format is the link status 93 which contains information as to either acknowledgment (ACK) or negative acknowledgment (NAK) of the message transmitted, information as to whether an error occurred during transmission, and a sequence number (tag) of the current message. Every message is assigned a sequence number. A modulus 8 scheme is employed in the message format using the three least significant bits in the link status byte.

Next is the command and data field 94 which contains the transmitted data followed by an end-of-frame control sequence 95 marking the end of a message (DLE ETX). Finally a two byte checksum 96 is generated by applying an algorithm described in an article entitled "An Arithmetic Checksum for Serial Transmissions," J. G. Fletcher, IEEE Transactions on Communications, Volume Com-30, Jan. 1982. pp. 247-252.

A message packet response provided back to the station 18 from the reader/writer 15 or from the card 10 is identical to the message packet generated by the station. The message format depicted in FIG. 9 is thus applicable to communications between all of the sub-systems. The preamble of a message transmitted from the station 18 consists of 8 bytes. A message is considered received correctly by the station 18 it at least three of these consecutive preamble characters are detected by the sub-system to which it is then attempting to communicate.

To initialize communication with either the reader/writer 15 or card 10, the station 18 sends a 'link reset' message. Communication tails it the station receives a NAK or a predetermined time expires before a response is received.

Once communication with the reader/writer 15 is established, the reader/writer informs the station 18 when the card 10 is inserted or if the card is already present. After the card 10 is inserted, the reader/writer 15 signals 'attention' to the station 18. When the station determines that the inserted card is a smart card rather than, for example, a card having only a magnetic stripe, the station sends a link reset message to the card to initialize it. Once initialized, the card awaits commands from the application layer 181 in the station 18. When a request is received, it is processed by a command layer 101 in the card 10 and a response is sent back to the station 18 while the card 10 waits for the next command. The station 18 can arbitrarily choose which subsystem to address and what message to send, i. e. either link reset or a command.

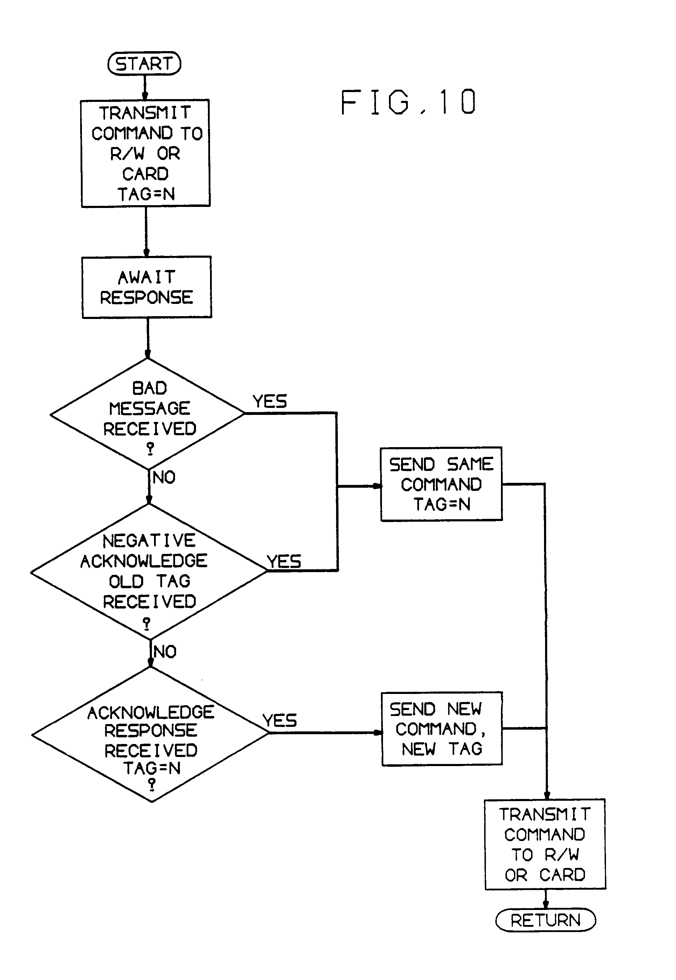

FIG. 10 is a flow chart illustrating the link layer decision making process for the station 18. In communicating with the reader/writer 15 or the card 10 during a normal transaction, the station 18 sends a message and sets up a timer. Next, the station either receives a response from the subsystem it is then attempting to communicate with or the timer expires. It the link status byte in the message response to the station contains an ACK, this reflects that the transaction has been completed successfully and the tag value is incremented to modulus 8. The response is then provided to the application layer 181 in the station 18.

If a negative acknowledge or NAK is received, at least two more link retries are attempted and the tag value stays the same. The station does not ask for a retransmission, rather it transmits the last command. It an acknowledge or ACK is not received after three tries, link level error recovery is initiated.

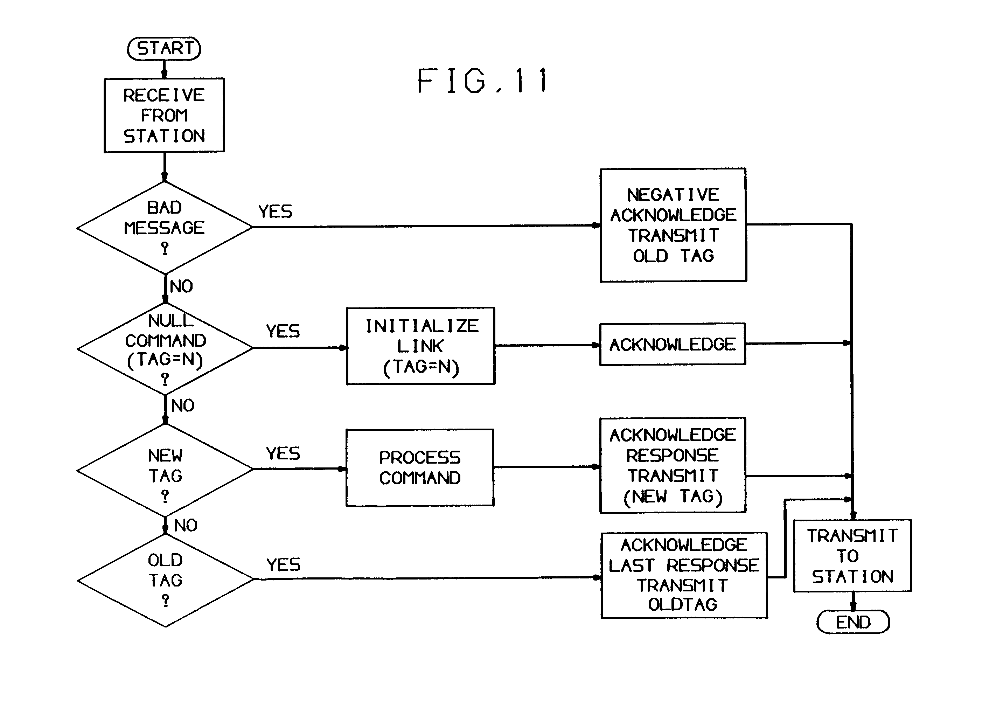

FIG. 11 is a flow chart illustrating the link layer decision making process for both the reader/writer 15 and the card 10. Referring to both FIG. 8 and FIG. 10, in communicating back to the station during a normal transaction, the reader/writer 15 or the card 10 observes the tag for each message it receives to decide if the current request is a new transaction, or a retransmit request for the previous one. If the current tag value is different from the tag value of the previous transaction then the incoming message is treated as a new transaction. If the current tag value equals the previous tag value then a retransmission is being requested by the station 18. The reader/writer 15 or card 10 always responds with the tag associated with the last valid command it has processed. Thus if a present transmission tails i.e. 'bad message' the link layer responds with negative acknowledge (NAK) and the last valid tag. A 'null' command causes the reader/writer 15 or card 10 to reset it's sequencing tag to the tag it receives. On reset, the reader/writer 15 or card 10 initiates the tag to an invalid value to insure that the incoming message is treated as a new one.

Termination of a session with a card 10 may be initiated by the station 18 requesting the reader/writer 15 to turn otf power to the card 10 or by the user pulling out the card 10. In the latter case, the reader/writer 15 automatically stops powering the empty card slot and signals 'attention' to the station 18. The station then sends a 'status request' command to the reader/writer 15. In its response, the reader/writer 15 notifies the station 18 that the card 10 has been pulled out and the link layer reports communication errors to the application layer after the three unsuccessful attempts to communicate with the card 10. This is necessary since only the application layer can declare the reader/writer as inactive.

## Claims

1. A multipurpose portable data carrier (10) comprising a plurality of files (31-33) for storing alterable data, each of the plurality of files being selectably addressable by an associated station (18) for accessing desired alterable data, access to each particular file for a desired transaction being allowed only to a user authorized to conduct transactions within the particular file, and access to the portable data carrier being controlled by a first password assigned to a user authorized to conduct transactions within the portable data carrier, each file in the portable data carrier including files permission information (41) for defining the type of access permitted, the file permission information including read permission, write permission and append permission, a first file (43) having read permission allowing a user to only read data therein, a second file (44) having write permission allowing a user to read data therein and write data thereto, and a third file (45) having read and append permission allowing a user to only read data therein and append data thereto.

2. The multipurpose portable data carrier as in claim 1 wherein access to each particular file for a desired transaction is controlled by a second password assigned to a user authorized to conduct transactions within the particular file.

3. The multupurpose portable data carrier as in claim 2 further including multiple security levels hierarchically arranged in a manner to comprise a least secure level, a most secure level and multiple other security levels interposed therebetween, access to each security level being controlled by a corresponding password assigned only to a user authorized to access the data at that security level.

4. The multipurpose portable data carrier as in claim 2 wherein the file permission information is assignable according to security level, a first higher order security level having permission to read data in and write data to the second file (44) and a second lower security level having permission to only read data in the second file.

5. The multipurpose portable data carrier as in claim 3 wherein the file permission information is assignable according to security level, a first higher order security level having permission to read data in and write data to the second file and a second lower security level having permission to read data in and only append to the data in the second file.

6. The multipurpose portable data carrier as in claim 1 further comprising files selectably addressable by multiple associated stations for accessing desired alterable data, access to each particular file being controlled by the configuration of each associated station.

7. The multipurpose portable data carrier as in claim 6 wherein access to the particular file for a desired transaction is controlled by a password assigned to the station authorized to conduct transactions within the particular file.

8. The pultipurpose portable data carrier as in claim 7 wherein access to the portable data carrier is controlled by a password assigned to a user authorized to conduct transactions with the portable data carrier.

9. The multipurpose portable data carrier as in claim 8 wherein each file in the portable data carrier includes files permission information for defining the type of access permitted by a user at the associated station.

10. The multipurpose portable data carrier as in claim 9 wherein the file permission information in the portable data carrier includes read permission, write permission and append permission, a first file having read permission allowing a user at a suitable configured station to only read data therein, a second file having write permission allowing a user to read data therein and write data thereto, and a third file having read and append permission allowing a user to only read data therefrom and append data thereto.

11. The multipurpose portable data carrier as in claim 10 further including multiple security levels hierarchically arranged in a manner to comprise a least secure level a most secure level and multiple other security levels interposed therebetween, access to each security level being controlled by a corresponding password assigned only to a user authorized to access the data at the security level.

## Patentansprüche

1. Tragbarer Mehrzweck-Datenträger (10) mit einer Vielzahl von Dateien (31-33) zur Speicherung änderbarer Daten, wobei ‚jede Datei selektiv durch eine zugeordnete Station (18) für einen Zugriff zu gewünschten, änderbaren Daten adressierbar ist, der Zugriff zu einer bestimmten Datei für eine gewünschte Transaktion nur für einen Benutzer zugelassen ist, der zur Durchführung von Transaktionen innerhalb der bestimmten Datei autorisiert ist, der Zugriff zu dem tragbaren Datenträger durch ein erstes Passwort gesteuert wird, das einem zur Ausführung von Transaktionen im tragbaren Datenträger autorisierten Benutzer zugeordnet ist, jede Datei im tragbaren Datenträger Datei-Zuganggsinformationen (41) zur Definition des zugelassenen Zugriffstyps enthält, die Datei-Zugangsinformationen einen Lesezugang, einen Schreibzugang und einen Anfügungszugang umfassen, eine erste Datei (43) mit einem Lesezugang, einem Benutzer nur erlaubt, Daten in der Datei zu lesen, eine zweite Datei (44) mit einem Schreibzugang einem Benutzer erlaubt, Daten in der Datei zu lesen und Daten in die Datei zu schreiben und eine dritte Datei (45) mit einem Lese- und einem Anfügungszugang einem Benutzer nur erlaubt, Daten in der Datei zu lesen und Daten an die Datei anzufügen.

2. Mehrzweck-Datenträger nach Anspruch 1, bei dem der Zugriff zu jeder bestimmten Datei für eine gewünschte Transaktion durch ein zweites Passwort. gesteuert wird, das einem zur Durchführung von Transaktionen in der bestimmten Datei autorisierten Benutzer zugeordnet ist.

3. Mehrzweck-Datenträger nach Anspruch 2, mit ferner mehreren Sicherheitsstufen, die hierachisch so angeordnet sind, daß sie eine niedrigste Sicherheitsstufe, eine höchste Sicherheitsstufe und mehrere weitere, dazwischen gelegene Sicherheitsstufen umfassen, wobei der Zugriff zu jeder Sicherheitsstufe durch ein entsprechendes Passwort gesteuert wird, das nur einem Benutzer zugeordnet ist, der für einen Zugriff zu den Daten auf dieser Sicherheitsstufe autorisiert ist.

4. Mehrzweck-Datenträger nach Anspruch 2, bei dem die Datei-Zugangsinformationen entsprechend der Sicherheitsstufe zugeordnet werden können, eine erste Sicherheitsstufe höherer Ordnung, die Erlaubnis hat, Daten in der zweiten Datei (44) zu lesen und Daten in die zweite Datei zu schreiben, und eine zweite, niedrigere Sicherheitsstufe die Erlaubnis hat, nur Daten in der zweiten Datei zu lesen.

5. Mehrzweck-Datenträger nach Anspruch 3, bei dem die Datei-Zugangsinformationen entsprechend der Sicherheitsstufe zugeordnet werden können, eine erste Sicherheitsstufe höherer Ordnung die Erlaubnis, Daten in der zweiten Datei zu lesen und Daten in die zweite Datei zu schreiben und eine zweite, niedrige Sicherheitsstufe die Erlaubnis hat, Daten in der zweiten Datei zu lesen und nur Daten an die Daten in der zweiten Datei anzufügen.

6. Mehrzweck-Datenträger nach Anspruch 1, mit ferner Dateien, die wählbar durch mehrere zugeordnete Stationen für einen Zugriff zu gewünschten änderbaren Daten adressierbar sind, wobei der Zugriff zu jeder bestimmten Datei durch die Konfiguration jeder zugeordneten Station gesteuert wird.

7. Mehrzweck-Datenträger nach Anspruch 6, bei dem der Zugriff zu der bestimmten Datei für eine gewünschte Transalktion durch ein Passwort gesteuert wird, das der zur Durchführung von Transaktionen in der bestimmten Datei autorisierten Station zugeordnet ist.

8. Mehrzweck-Datenträger nach Anspruch 8, bei dem der Zugriff zu dem Datenträger durch ein Passwort gesteuert wird, das einem zur Durchführung von Transaktionen mit dem Datenträger autorisierten Benutzer zugeordret ist.

9. Mehrzweck-Datenträger nach Anspruch 9, bei dem ,jede Datei im Datenträger Datei-Zugangsinformationen zur Definition des Zugriffstyps enthält, der für einen Benutzer an der zugeordneten Station zugelassen ist.

10. Mehrzweck-Datenträger nach Anspruch 9, bei dem die Datei-Zugangsinformationen im Datenträger einen Lesezugang, einen Schreibzugang und einen Anfügungszugang erthalten, eine erste Datei mit einem Lesezugang, einem Benutzer an einer geeignet konfigurierten Station nur gestattet, Daten in der Datei zu lesen, eine zweite Datei mit einem Schreibzugang einem Benutzer gestattet, Daten in der Datei zu lesen und Daten in die Datei zu schreiben und eine dritte Datei mit einem Lese- und einem Anfügungszugang einem Benutzer nur gestattet, Daten in der Datei zu lesen und Daten an die Datei anzufügen.

11. Mehrzweck-Datenträger nach Anspruch 10, mit ferner mehreren Sicherheitsstufen, die hierachisch so angeordnet sind, daß sie eine niedrigste Sicherheitsstufe, eine höchste Sicherheitsstufe und mehrere dazwischen gelegene Sicherheitsstufen umfassen, wobei der Zugriff zu jeder Sicherheitsstufe durch ein entsprechendes Passwort gesteuert wird, das nur einem Benutzer zugeordnet ist, der für einen Zugriff zu den Daten auf der Sicherheitsstufe autorisiert ist.

**Revendications**

1. Un support de données portable à usages multiples (10)

comprenant un ensemble de fichiers (31-33), qui sont destinés à enregistrer des données modifiables, chaque fichier de l'ensemble de fichiers pouvant être adressé de façon sélectionnée par une station associée (18), pour accéder à des données modifiables désirées, l'accès à chaque fichier particulier pour une transaction désitée n'étant autorisé que pour un utilisateur qui est autorisé à accomplir des transactions avec le fichier particulier, et l'accès au support de données portable étant commandé par un premier mot de passe qui est attribué à un utilisateur ayant l'autorisation d'effectuer des transactions avec le support de données portable, chaque fichier dans le support de données portable comprenant une information de permission de fichier (41) qui est destinée à définir le type d'accès permis, l'information de permission de fichier comprenant une permission de lecture, une permission d'écriture et une permission d'ajout, un premier fichier (43) ayant une permission de lecture qui permet à un utilisateur de lire seulement des données dans le fichier, un second fichier (44) ayant une permission d'écriture qui permet à un utilisateur de lire des données dans le fichier et d'écrire des données dans ce dernier, et un troisième fichier (45) ayant une permission de lecture et d'ajout qui permet seulement à un utilisateur de lire des données dans le fichier et d'y ajouter des données.

2. Le support de données portable à usages multiples selon la revendication 1, dans lequel l'accès à chaque fichier particulier pour une transaction désirée est commandé par un second mot de passe qui est attribué à un utilisateur autorisé à effectuer des transactions dans le fichier particulier.

3. Le support de données portable à usages multiples selon la revendication 2, comprenant en outre des niveaux de sécurité multiples organisés de manière hiérarchisée de façon à comprendre un niveau de plus faible sécurité, un niveau de plus haute sécurité et de multiples autres niveaux de sécurité intercalés entre les niveaux précités, l'accès à chaque niveau de sécurité étant commandé par un mot de passe correspondant qui est attribué seulement à un utilisateur autorisé à accéder aux données à ce niveau de sécurité.

4. Le support de données portable à usages multiples selon la revendication 2, dans lequel l'information de permission de fichier peut être attribuée conformément au niveau de sécurité, un premier niveau de sécurité, d'ordre supérieur, ayant la permission de lire des données et d'écrire des données dans le second fichier (44), tandis qu'un second niveau de sécurité, d'ordre inférieur, a seulement la permission de lire des données dans le second fichier.

5. Le support de données portable à usages multiples selon la revendication 3, dans lequel l'information de permission de fichier peut être attribuée conformément à un niveau de sécurité, un premier niveau de sécurité, d'ordre supérieur, ayant la permission de lire des données et d'écrire des données dans le second fichier, tandis qu'un second niveau de sécurité, d'ordre inférieur, a la permission de lire des données et seulement d'ajouter des données dans le second fichier.

6. Le support de données portable à usages multiples selon la revendication 1, comprenant en outre des fichiers pouvant être adressés sélectivement par de multiples stations associées pour accéder à des données modifiables désirées, l'accès à chaque fichier particulier étant commandé par la configuration de chaque station associée.

7. Le support de données portable à usages multiples selon la revendication 6, dans lequel l'accès à un fichier particulier pour une transaction désirée est commandé par un mot de passe qui est attribué à la station autorisée à effectuer des transactions dans le fichier particulier.

8. Le support de données portable à usages multiples selon la revendication 7, dans lequel l'accès au support de données portable est commandé par un mot de passe qui est attribué à un utilisateur autorisé à effectuer des transactions avec le support de données portable.

9. Le support de données portable à usages multiples selon la revendication 8, dans lequel chaque fichier dans le support de données portable contient une information de permission de fichier qui est destinée à définir le type d'accès qui est permis à un utilisateur se trouvant à la station associée.

10. Le support de données portable à usages multiples selon la revendication 9, dans lequel l'information de permission de fichier dans le support de données portable comprend une permission de lecture, une permission d'écriture et une permission d'ajout, un premier fichier ayant une permission qui autorise seulement la lecture des données dans ce fichier par un utilisateur se trouvant à une station ayant une configuration appropriée, un second fichier ayant une permission d'écriture qui autorise un utilisateur à lire des données dans le fichier et à écrire des données dans ce dernier, et un troisième fichier ayant une permission de lecture et d'ajout qui autorise un utilisateur seulement à lire des données dans le fichier et à y ajouter des données.

11. Le support de données portables à usages multiples selon la revendication 10, comprenant en outre des niveaux de sécurité multiples organisés de façon hiérarchisée, de manière à comprend un niveau de plus faible sécurité, un niveau de plus haute sécurité et de multiples autres niveaux de sécurité intercalés entre les niveaux précités, l'accès à chaque niveau de sécurité étant commandé par un mot de passe correspondant qui est attribué seulement à un utilisateur autorisé à accéder aux données à ce niveau de sécurité.

FIG.1

# FIG.2

| SECURITY LEVEL | USER |
|---|---|
| 6 | DEVELOPER |
| 5 | SUPER USER (FACTORY) |
| 4 | MASTER ISSUER (OWNER) |
| 3 | SUB ISSUER |
| 2 | USER (CARD HOLDER) |
| 1 | PUBLIC (CARD OWNER INFO) (MEDICAL DATA) |

EP 0 270 571 B1

# FIG.3

| | | | |
|---|---|---|---|
| 35 HEADER | PASSWORDS, RECORD SIZE, MEMORY SIZE, SECURITY | | |

30 DATA

n BYTES

31, 32, 33

EP 0 270 571 B1

FIG.4

| FILE ID | READ PERMISSION | WRITE PERMISSION | APPEND PERMISSION | DATA |
|---|---|---|---|---|

| FILE ID | DATA |
|---|---|

| FILE ID | DATA | | M |
|---|---|---|---|

M BYTES

EP 0 270 571 B1

# FIG.5

| SECURITY LEVEL | USER | FEATURE PER FILE |
|---|---|---|
| 4 | MASTER ISSUER (OWNER) | OPTIONAL PASSWORD |
| 3 | SUB ISSUER | OPTIONAL PASSWORD AND APPEND ONLY |
| 2 | USER (CARD HOLDER) | OPTIONAL PASSWORD AND APPEND ONLY |
| 1 | PUBLIC (CARD OWNER INFO) (MEDICAL DATA) | OPTIONAL PASSWORD AND APPEND ONLY |

EP 0 270 571 B1

# FIG.6

| COMMAND PRIMITIVES | DEVELOPER | SUPER USER | MASTER ISSUER | SUB ISSUER | USER | PUBLIC |
|---|---|---|---|---|---|---|
| CREATE | X | X | X | X | X | X |
| DIRECTORY | X | X | X | X | X | X |
| FORMAT | X | X | X | | | |
| INFO | X | X | X | X | X | |
| LOCK | X | X | X | X | X | |
| LOGIN | | | X | X | X | |
| MARK - EOF | X | X | X | X | X | X |
| OPEN | X | X | X | X | X | X |
| PASSWORD | X | X | X | X | X | |
| READ | X | X | X | X | X | X |
| REMOVE | X | X | X | X | X | X |
| RESET | X | X | X | X | X | X |
| SEEK | X | X | X | X | X | X |
| SPACE | X | X | X | X | X | X |
| STATUS | X | X | X | X | X | X |
| UNLOCK | X | X | X | X | X | |
| WRITE | X | X | X | X | X | X |

# FIG.7

```
          ( START )
              │
              ▼
        ┌───────────┐
        │   LOGIN   │
        │  COMMAND  │
        └───────────┘
              │
              ▼
          ╱─────────╲        NO
         ╱ PARAMETERS ╲──────────────┐
         ╲    OK?    ╱                │
          ╲─────────╱                 │
              │ YES                    │
              ▼                        │
        ┌───────────┐                  │
        │  UPDATE   │                  │
        │  FAILURE  │                  │
        │  COUNTER  │                  │
        └───────────┘                  │
              │                        │
              ▼                        │
          ╱─────────╲        NO        │
         ╱ PASSWORD  ╲────────────────┤
         ╲    OK?    ╱                 │
          ╲─────────╱                  │
              │ YES                     │
              ▼                         │
        ┌───────────┐                   │
        │   CLEAR   │                   │
        │  FAILURE  │                   │
        │  COUNTER  │                   │
        └───────────┘                   │
              │                         │
              └────────────┐            │
                           ▼            ▼
                      ┌───────────┐
                      │ TRANSMIT  │
                      │    TO     │
                      │  STATION  │
                      └───────────┘
                           │
                           ▼
                        ( END )
```

# FIG.8

187

18

182 TERMINAL INTERFACE

183

184 DATABASE INTERFACE

APPLICATION LAYER

181

185 LIBRAY LAYER

186 LINK LAYER

15

151 LINK LAYER

152 COMMAND LAYER

10

102 LINK LAYER

101 COMMAND LAYER

103 EEPROM INTERFACE

# FIG.9

| PREAMBLE-ADDRESS 91 | START OF FRAME 92 | | LINK STATUS 93 | COMMAND AND DATA 94 | END OF FRAME 95 | | CHECKSUM 96 | |
|---|---|---|---|---|---|---|---|---|
| | DLE | STX | | | DLE | ETX | | |

EP 0 270 571 B1

FIG.10

START

TRANSMIT
COMMAND TO
R/W OR
CARD
TAG=N

AWAIT
RESPONSE

BAD
MESSAGE
RECEIVED
?

YES

NO

NEGATIVE
ACKNOWLEDGE
OLD TAG
RECEIVED
?

YES

NO

ACKNOWLEDGE
RESPONSE
RECEIVED
TAG=N
?

YES

SEND SAME
COMMAND
TAG=N

SEND NEW
COMMAND,
NEW TAG

TRANSMIT
COMMAND
TO R/W
OR CARD

RETURN

FIG.11

EP 0 270 571 B1